# EUROPÄISCHE PATENTSCHRIFT

(11) **EP 2 977 596 B1**
(45) Veröffentlichungstag und Bekanntmachung des Hinweises auf die Patenterteilung: **21.11.2018**
(21) Anmeldenummer: 15002250.7
(22) Anmeldetag: 29.07.2015
(51) Int. Cl.: F02D 41/14, F02D 19/02, F02D 41/00

(54) **BRENNKRAFTMASCHINE MIT EINER REGELEINRICHTUNG**
COMBUSTION ENGINE WITH A CONTROL DEVICE
MOTEUR A COMBUSTION INTERNE DOTE D'UN DISPOSITIF DE REGLAGE

(30) Priorität: 22.07.2014 AT 5752014
(43) Veröffentlichungstag der Anmeldung: 27.01.2016
(73) Patentinhaber: GE Jenbacher GmbH & Co. OG, 6200 Jenbach (AT)
(72) Erfinder: Huber, Johannes, 6234 Brandenberg (AT); Kopecek, Herbert, 6130 Schwaz (AT); Spyra, Nikolaus, 6020 Innsbruck (AT); Waldhart, Michael, 6410 Telfs (AT)
(74) Vertreter: Torggler & Hofinger Patentanwälte

(56) Entgegenhaltungen:
- EP-A1- 1 158 149
- EP-A1- 1 602 813
- EP-A1- 2 594 443
- EP-A2- 0 687 809
- EP-A2- 1 225 330
- WO-A2-2012/097389
- US-A1- 2008 120 009

## Beschreibung

Die vorliegende Erfindung betrifft eine Brennkraftmaschine mit einer Regeleinrichtung.

Bei der aus der EP 0 259 382 B1 bekannten Regelstrategie wird in Abhängigkeit einer gemessenen Ist-Leistung der Brennkraftmaschine ein Ladedrucksollwert erzeugt und durch einen ersten Regelkreis (Ladedruckregler) über einen Soll-Ist-Wert-Vergleich der Lambda-Wert (Verhältnis von Luft zu Treibstoff) so eingestellt, dass der Istladedruck dem Ladedrucksollwert entspricht und bei diesem Ladedrucksollwert ein bestimmter Zielwert der NOx-Emission vorliegt. Da die NOx-Emission nicht direkt bekannt ist, wird der Ladedruck als Hilfsregelgröße verwendet. Der funktionale Zusammenhang liegt in Form einer Kurvenschar vor, wobei jede Kurve für einen bestimmten NOx-Wert den Zusammenhang zwischen Ist-Leistung und Ladedrucksollwert angibt. Insofern ist also der Ladedruckregler eigentlich ein Emissionsregelkreis in Bezug auf die NOx-Emission (NOx-Emissionsregelkreis).

Die Einstellung des Lambda-Wertes erfolgt über Beeinflussung einer Gasdosiereinrichtung. Die Veränderung des Lambda-Wertes würde an sich eine Veränderung der Leistung der Brennkraftmaschine bewirken, was durch einen zweiten Regelkreis (Leistungsregelkreis) ausgeglichen werden muss. Dieser Ausgleich im Leistungsregelkreis erfolgt über jene Aktuatoren, die den Ladedruck unmittelbar beeinflussen (Drosselklappe und Verdichterumblasung). Der Ladedruck wird also indirekt über den Lambda-Wert geregelt. Diese Regelstrategie ist als LEANOX®-Verfahren bekannt.

Es wird demgemäß also der funktionale Zusammenhang zwischen dem vor den Einlaßventilen des Motors herrschenden, relativ leicht messbaren Ladedruck und der Leistung ausgenutzt.

Dazu ist der Ausgang der Ladedruckmessung mit einem Istwert-Eingang des ersten Regelkreises verbunden. Im ersten Regelkreis der EP 0 259 382 B1 (Ladedruckregler) ist eine programmierbare Einrichtung zur Ermittlung eines leistungsabhängigen Sollwertes für den Ladedruck aus dem von der Leistungsmesseinrichtung zugeführten Leistungsmesssignal angeordnet.
Dabei erfolgt die Regelung des Ladedrucks indirekt über die Regelung des Verbrennungs-Luftverhältnisses (Lambda) im Luft-Gas-Mischer, wobei beispielsweise ein Abmagern des Gemisches (Erhöhen von Lambda) eine Erhöhung des Ladedrucks vor den Einlaßventilen bewirkt (bei der Forderung einer konstanten Motorleistung).
Allerdings ergeben sich durch die Kopplung einer Leistungsregelung mit einer Regelung des Ladedrucks (ersatzweise für eine unmittelbare NOx-Emissionsregelung) unter Einhaltung eines Zielwertes der NOx-Emission verschiedene Nachteile, wie zum Beispiel Stabilitätsprobleme, und ein ungünstiges transientes Verhalten (langsames Anfahren erforderlich),

EP1225330 und EP1602813 offenbaren zwei Regelkreise zur Kontrolle der Leistung und der NOx-Emissionen Aufgabe der Erfindung ist die Bereitstellung einer Brennkraftmaschine mit einer Regeleinrichtung, die bei Beibehaltung der Einhaltung eines Zielwertes der NOx-Emission die oben beschriebenen Nachteile vermeidet und insbesondere ein günstiges transientes Verhalten aufweist.
Diese Aufgabe wird durch eine Brennkraftmaschine mit einer Regeleinrichtung nach Anspruch 1 gelöst. Vorteilhafte Ausführungsformen sind in den abhängigen Ansprüchen definiert.
Auch bei der Erfindung erfolgt die NOx-Emissionsregelung mittels der Hilfsgröße Ladedruck, jedoch erfolgt die Leistungsregelung über den Lambda-Wert.

Dazu ist erfindungsgemäß vorgesehen, dass der Leistungsregelkreis dazu ausgebildet ist, eine Ist-Leistung der Brennkraftmaschine an eine Soll-Leistung der Brennkraftmaschine über eine Einstellung des Lambda-Werts anzugleichen
und der NOx-Emissionsregelkreis dazu ausgebildet ist, über einen - an sich bekannten - funktionalen Zusammenhang zwischen Soll-Leistung und Ladedruck den Ladedruck als Ersatzgröße für die NOx-Emission den Ladedruck beeinflussende Aktuatoren so anzusteuern, dass für jede Soll-Leistung der Brennkraftmaschine ein Zielladedruck einstellbar ist.

Im Unterschied zum Stand der Technik wird bei der Erfindung also der Ladedruck über einen Ladedruckregler eingestellt, der direkt, d. h. ohne Einbeziehung der Leistungsregelung, auf die entsprechenden Aktuatoren zur Beeinflussung des Ladedrucks wirkt. Der NOx-Emissionsregelkreis steuert die den Ladedruck beeinflussenden Aktuatoren so an, dass für jede Soll-Leistung der Brennkraftmaschine ein Zielladedruck eingestellt wird. Beispiele für solche den Ladedruck beeinflussende Aktuatoren sind etwa ein Verdichterumblaseventil, eine Drosselklappe, eine variable Kompressorgeometrie, ein Wastegate und eine variable Turbinengeometrie.
Die Ansteuerung der den Ladedruck beeinflussenden Aktuatoren erfolgt also nicht im Leistungsregelkreis sondern unmittelbar im NOx-Emissionsregelkreis und nur in Abhängigkeit der Soll-Leistung, nicht der Ist-Leistung. Es erfolgt also hinsichtlich der Regelkreise keine Kopplung von NOx-Emissionsregelung und Leistungsregelung, sondern es besteht eine Kopplung nur über die unvermeidbaren physikalischen Zusammenhänge innerhalb der Brennkraftmaschine.

Bevorzugt ist vorgesehen, dass der NOx-Emissionsregelkreis einen Ladedruckregler aufweist, durch welchen ein Istladedruck an einen Ladedrucksollwert angleichbar ist, wobei Ladedruckregler entweder in Form eines ersten Komparators und eines ersten PID-Reglers oder als modellbasierter Regler ausgeführt ist.

Es kann vorgesehen sein, dass der Leistungsregelkreis einen ersten Regler aufweist, durch welchen Aktuatoren - vorzugsweise Port-Injection-Ventile oder eine Gasdosiereinrichtung eines Gasmischers - welche den Brenngasmassenstrom u_{gas} beeinflussen, ansteuerbar sind, wobei der Regler entweder einen zweiten Komparator und einen zweiten PID-Regler aufweist oder als modellbasierter Regler ausgebildet ist.

Bevorzugt kann vorgesehen sein, dass im Leistungsregelkreis zusätzlich ein Skip-Fire-Regelmodul vorgesehen ist, welchem als Input die Soll-Leistung zuführbar ist und welches dazu ausgebildet ist, den ersten Regler für den Brenngasmassenstrom so anzusteuern, dass in ausgewählten Zylindern der Brennkraftmaschine mangels Brenngas keine Verbrennung erfolgt.

In einer weiteren bevorzugten Ausführungsform ist vorgesehen, der erste Regler innerhalb des Leistungsregelkreises derart ausgebildet ist, dass dem Regler weitere Ist-Größen als Input des Reglers zuführbar sind, wobei der Regler unter Berücksichtigung der weiteren Ist-Größen die Stellgröße des Lambda-Werts dahingehend limitiert, dass bei Erreichen von Grenzwerten der Ist-Größen keine weitere Änderung der Stellgröße des Lambda-Werts in eine die Ist-Größe(n) weiter abträglich beeinflussende Richtung erfolgt. Eine abträgliche Beeinflussung wäre beispielsweise eine weitere Anfettung (niedrigerer Lambda-Wert) bei bereits hoher Abgastemperatur austrittseitig der Brennkraftmaschine oder eine Abmagerung (höherer Lambda-Wert) bei Vorliegen von Aussetzersignalen von Zylindern der Brennkraftmaschine.

Es kann vorgesehen sein, dass dem Leistungsregelkreis und dem NOx-Emissionsregelkreis ein Trajektoriengenerator vorgelagert ist, welcher dazu ausgebildet ist, eine nicht-stetige, sprungförmige Vorgabe der Soll-Leistung durch einen Benutzer, in eine stetige Trajektorie für die Soll-Leistung umzuwandeln.

Es kann bevorzugt vorgesehen sein, dass der Trajektoriengenerator dazu ausgebildet ist, als Input zusätzlich die Ist-Leistung zu erhalten und eine Abweichung zwischen dem momentanen Wert der Soll-Leistung gemäß der stetigen Funktion und der Ist-Leistung dahingehend zu überwachen, dass bei zu großer Abweichung die stetige Funktion der Soll-Leistung auf einen bestimmten Wert über der Ist-Leistung limitiert wird.

Es kann eine Totzeitkompensationseinrichtung vorgesehen sein, welche dazu ausgebildet ist, die Soll-Leistung, die Ist-Leistung und den Istladedruck zu einer Zeit zu erhalten und in um eine Totzeit D in die Zukunft prädizierter Form als Output wieder auszugeben. Die Totzeit D wird entweder ständig während des Betriebes mittels geeigneter Modelle geschätzt, oder aus Versuchen vorab bestimmt.

Bevorzugt kann vorgesehen sein, dass ein weiterer Regler vorgesehen ist, welcher dazu ausgebildet ist, den Output der Totzeitkompensationseinrichtung als Input zu erhalten und in Abhängigkeit des Inputs einen Sollwert für den Lambda-Wert auszugeben.

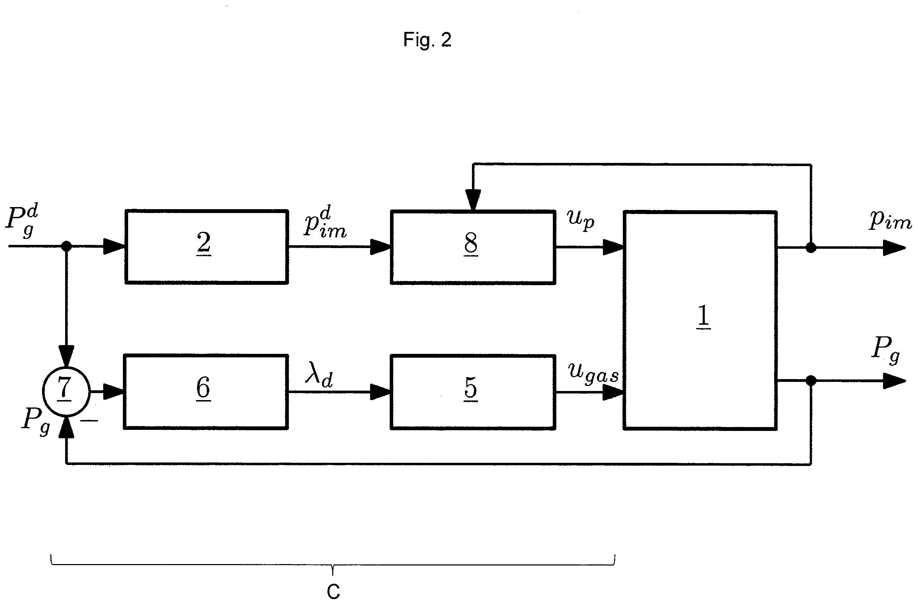

Weitere Vorteile und Einzelheiten der Erfindung werden für verschiedene Ausführungsbeispiele anhand der Figuren 2 bis 7 diskutiert.

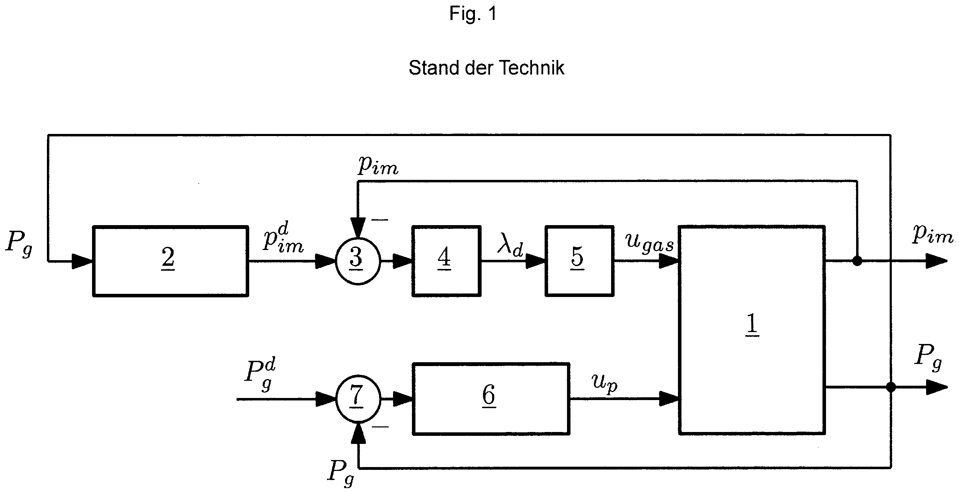

Figur 1 zeigt den Stand der Technik nach der EP 0 259 382 B1.
Die genannten logischen Baugruppen müssen nicht als physische Bauteile vorliegen, sondern können als Schaltkreise in der Regeleinrichtung der Brennkraftmaschine realisiert sein.

Figur 1 zeigt den Stand der Technik nach der EP 0 259 382 B1. Gezeigt ist schematisch eine Brennkraftmaschine 1, der ein Brenngasmassenstrom u_{gas} zugeführt wird. Der Brenngasmassenstrom U_{gas} kann über einen Regler 5, der geeignete Aktuatoren (zum Beispiel Port-Injection-Ventile oder Gasdosiereinrichtung eines Gasmischers) ansteuert, beeinflusst werden.

Der in Figur 1 oben dargestellte Regelkreis ist der NOx-Emissionsregelkreis.
Der NOx-Emissionsregelkreis umfasst in diesem Fall die Baugruppen bzw. logische Zusammenhänge mit den Bezugszeichen 2, 3, 4, 5 sowie den jeweiligen Input- und Output-Größen. Er beinhaltet in geeigneter Form (zum Beispiel in Form einer Look-Up-Table oder einer Funktion) den funktionalen Zusammenhang 2 zwischen Ladedrucksollwert p^{d}ᵢₘ (als Output des funktionalen Zusammenhangs 2) und Ist-Leistung P_{g} (als Input des funktionalen Zusammenhangs 2) für einen bestimmten NOx-Wert in Form einer Kurve. Im Komparator 3 erfolgt ein Soll-Ist-Vergleich zwischen Ladedrucksollwert p^{d}ᵢₘ und Istladedruck pᵢₘ. Die Abweichung p^{d}ᵢₘ - pᵢₘ wird einem PID-Regler 4 zugeführt. Dieser gibt einen Sollwert λ^{d} für den Lambda-Wert aus, welcher als Input für den die den Brenngasmassenstrom u_{gas} beeinflussenden Aktuatoren ansteuernden Regler 5 dient. Der Regler 5 kann auch als Steuerung, also ohne Rückführung der Zielgröße λ^{d} ausgeführt sein.

Der in Figur 1 unten dargestellte Regelkreis ist der Leistungsregelkreis. Er beinhaltet einen weiteren PID-Regler 6, dem als Input die in einem weiteren Komparator 7 bestimmte Abweichung P^{d}_{g} - P_{g} zwischen Soll-Leistung P^{d}_{g} und Ist-Leistung P_{g} zugeführt wird. Der PID-Regler 6 gibt als Output geeignete, den Istladedruck pᵢₘ beeinflussende Steuersignale uₚ an jene Aktuatoren (zum Beispiel Kompressor-Bypass-Ventil oder Drosselklappenventil) aus, welche einerseits den Istladedruck pᵢₘ und andererseits die Ist-Leistung P_{g} beeinflussen, wodurch sich die oben beschriebene starke Kopplung zwischen NOx-Emissionsregelkreis und Leistungsregelkreis ergibt.

Figur 2 zeigt ein erstes Ausführungsbeispiel der Erfindung, wobei dieselben Bezugszeichen dieselben Bauteile bzw. logische Abläufe bezeichnen wie in Figur 1.

Im Vergleich zur Figur 1 ist als erster Unterschied erkennbar, dass im NOx-Emissionsregelkreis anstelle der Ist-Leistung P_{g} der Brennkraftmaschine 1 die Soll-Leistung P^{d}_{g} der Brennkraftmaschine 1 als Input des funktionalen Zusammenhangs 2 eingeht. Dieser gibt daher im vorliegenden Fall den Zusammenhang zwischen Ladedrucksollwert p^{d}ᵢₘ (Output des funktionalen Zusammenhangs 2) und Soll-Leistung P^{d}_{g} (Input des funktionalen Zusammenhangs 2) für einen bestimmten NOx-Wert in Form einer Kurve an.

Im NOx-Emissionsregelkreis wird der Ladedrucksollwert p^{d}ᵢₘ einem Ladedruckregler 8 als Input zugeführt. Dieser Ladedruckregler 8 könnte durchaus wie in Figur 1 gezeigt in Form eines Komparators 3 und eines PID-Reglers 4 ausgeführt sein. Bevorzugt ist allerdings eine Ausführung als modellbasierter Regler, der zusätzlich zum aktuellen Ist-Ladedruck pᵢₘ auch den Ladedrucksollwert p^{d}ᵢₘ als Eingang benötigt. Im Unterschied zur Figur 1 erfolgt der Output des Ladedruckreglers 8 in Form von Steuersignalen uₚ, an jene Aktuatoren (zum Beispiel Kompressor-Bypass-Ventil oder Drosselklappenventil) die den Istladedruck pᵢₘ beeinflussen. Diese Steuersignale uₚ waren in Figur 1 der Output des PID-Reglers 6 und damit des Leistungsregelkreises. Weil in Figur 2 diese Steuersignale uₚ Teil des NOx-Emissionsregelkreises sind, ergibt sich die starke Kopplung der Figur 1 zwischen NOx-Emissionsregelkreis und Leistungsregelkreis bei der Erfindung nicht.

Der Leistungsregelkreis der Figur 2 unterscheidet sich von jenem der Figur 1 nur dadurch, dass der Regler 5, welche die Aktuatoren (zum Beispiel Port-Injection-Ventile oder Gasdosiereinrichtung eines Gasmischers), welche den Brenngasmassenstrom u_{gas} beeinflussen, ansteuert, im Leistungsregelkreis angeordnet ist. Anstelle der Anordnung Komparator 7 und PID-Regler 6 könnte auch ein modellbasierter Regler vorgesehen sein.

Im einfachsten Fall ergibt sich der funktionale Zusammenhang 2 in der oben beschriebenen Form als einfache Kurve. Wie bereits aus den auf der EP 0 259 382 B1 aufbauenden Schriften bekannt ist, kann der funktionale Zusammenhang 2 durch Aufnahme von Korrekturen hinsichtlich des Zündzeitpunkts, der Einlasstemperatur etc. korrigiert werden.

In Summe sind mit der Erfindung verschiedene Vorteile verbunden:
- es ist ein schnelleres Ausregeln von Lastwechseln (schnellere Anpassung der Ist-Leistung P_{g} der Brennkraftmaschine 1 an eine Änderung der Soll-Leistung P^{d}_{g}) möglich
- die Zielemissionswerte für NOx können bei Lastwechseln wesentlich früher erreicht werden
- die Emissionswerte für NOx bleiben bereits während eines Lastwechsels näher am erwünschten Wert, weil dem funktionalen Zusammenhang 2 leichter gefolgt werden kann

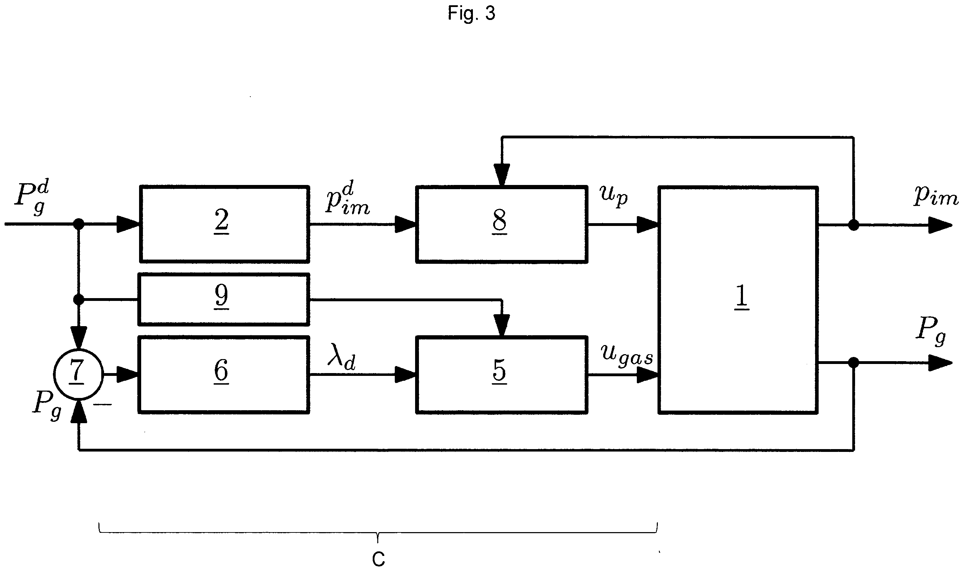

Die Figur 3 zeigt ein zweites Ausführungsbeispiel der Erfindung. Im Vergleich zur Figur 2 ist im Leistungsregelkreis zusätzlich ein Skip-Fire-Regelmodul 9 vorgesehen, welchem als Input die Soll-Leistung P^{d}_{g} zugeführt wird. Der Output des Skip-Fire-Regelmoduls 9 erfolgt an den Regler 5, welcher den Brenngasmassenstrom U_{gas} so ansteuert, dass in ausgewählten Zylindern der Brennkraftmaschine 1 mangels Brenngas keine Verbrennung erfolgt. Dies gestattet eine rasche Anpassung an Lastwechseln. Dies ist für Port-Injection-Brennkraftmaschinen vorteilhaft.

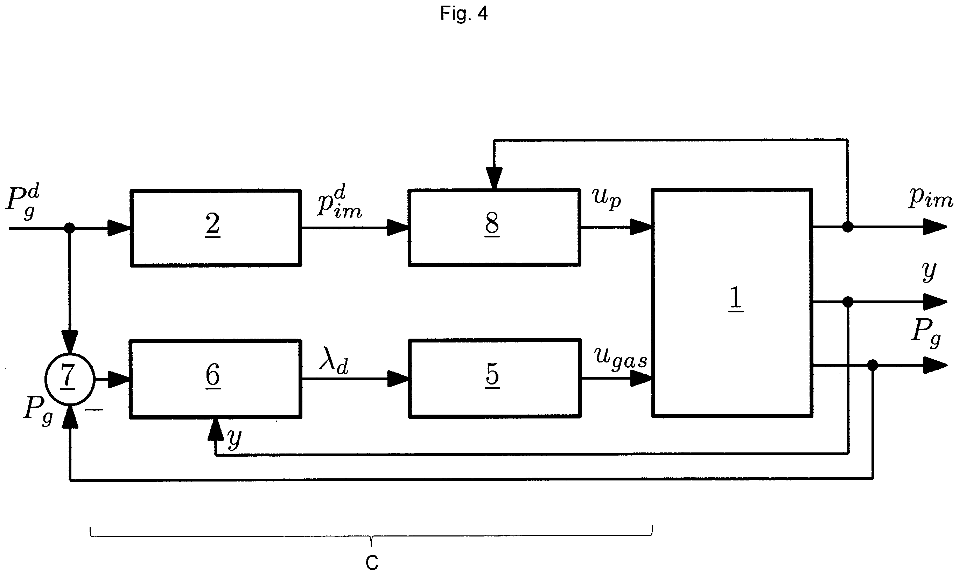

Die Figur 4 zeigt ein drittes Ausführungsbeispiel der Erfindung. Im Vergleich zur Figur 2 ist zusätzlich die Rückführung weiterer Ist-Größen y (hier: Abgastemperatur austrittseitig der Brennkraftmaschine 1 oder eintrittseitig einer allfälligen nicht dargestellten Abgasnachbehandlungseinheit und/oder Klopf- oder Aussetzersignale von Zylindern der Brennkraftmaschine 1 und/oder Öltemperatur und/oder Kühlwassertemperatur und/oder Ladelufttemperatur vor den Zylindern als Input des PID-Reglers 6 innerhalb des Leistungsregelkreises. Diese limitieren die Stellgröße λ_{d} dahingehend, dass bei Erreichen von Grenzwerten der Istgrößen keine weitere Änderung von λ_{d} in eine die Ist-Größen weiter abträglich beeinflussende Richtung erfolgt. Eine abträgliche Beeinflussung wäre beispielsweise eine weitere Anfettung (niedrigerer Lambda-Wert) bei bereits hoher Abgastemperatur austrittseitig der Brennkraftmaschine 1 oder eine Abmagerung (höherer Lambda-Wert) bei Vorliegen von Aussetzersignalen von Zylindern der Brennkraftmaschine 1. Die Rückführung weiterer Ist-Größen y stellt also eine Sicherheitsschleife dar, durch welche die Beeinflussung der Stellgröße λ_{d} nur in für die Brennkraftmaschine 1 verträglichen Grenzen geschieht.

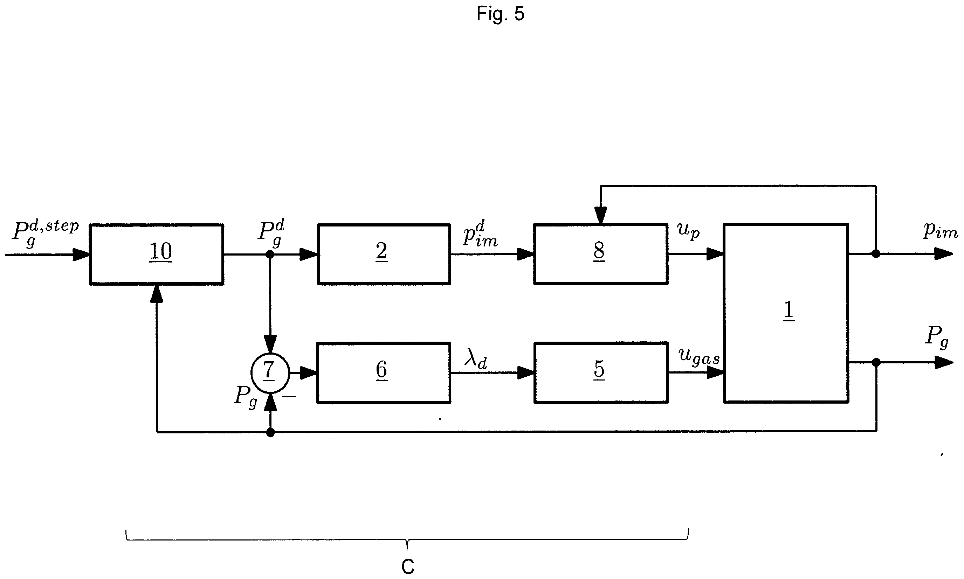

Die Figur 5 zeigt ein viertes Ausführungsbeispiel der Erfindung, wobei im Vergleich zur Figur 2 dem funktionalen Zusammenhang 2 ein Trajektoriengenerator 10 vorgelagert ist. Dieser wandelt eine nicht-stetige, sprungförmige Vorgabe der Soll-Leistung P^{d,step}_{g} durch einen Benutzer in eine stetige Trajektorie für die Soll-Leistung P^{d}_{g} um. Ausgehend von einem vorliegenden aktuellen Wert der Soll-Leistung P^{d}_{g} und einem erwünschten Endwert der Soll-Leistung P^{d}_{g} wird eine diese Werte verbindende, stetige Funktion gewählt, zum Beispiel in Form einer (vorzugsweise linearen) Rampe oder in Form eines Polynoms oder dgl. Dem Trajektoriengenerator 10 kann als Input zusätzlich die Ist-Leistung P_{g} zugeführt werden. Dadurch kann die Abweichung zwischen dem momentanen Wert der Soll-Leistung P^{d}_{g} gemäß der stetigen Funktion und der Ist-Leistung P_{g} dahingehend überwacht werden, dass bei zu großer Abweichung die stetige Funktion der Soll-Leistung P^{d}_{g} auf einen bestimmten Wert über der Ist-Leistung P_{g} limitiert wird. Dieser Fall kann zum Beispiel bei einer kalten Brennkraftmaschine 1 relevant werden.

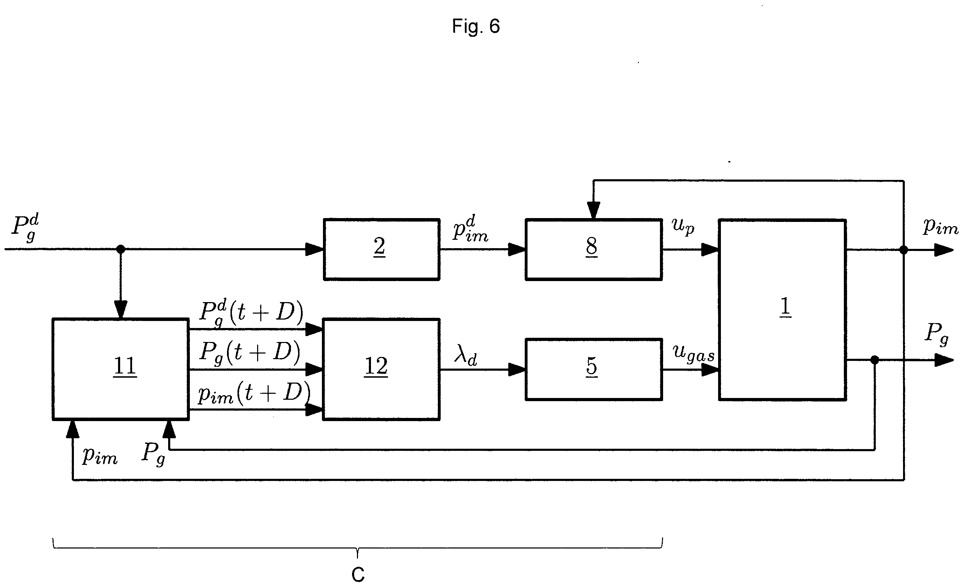

Figur 6 zeigt ein fünftes Ausführungsbeispiel der Erfindung, bei welchem im Vergleich zur Figur 2 eine Totzeitkompensationseinrichtung 11 vorgesehen ist. Diese ist besonders für gemischaufgeladene Brennkraftmaschinen 1 vorteilhaft. Input der Totzeitkompensationseinrichtung 11 sind die Soll-Leistung P^{d}_{g}, die Ist-Leistung P_{g} und der Istladedruck pᵢₘ. Die Eingangssignale P^{d}_{g}(t), P_{g}(t), pᵢₘ(t) zu einer Zeit t werden in einer um eine Totzeit D (Zeit, die zwischen einer Änderung des Brenngasmassenstromes und der entsprechenden Reaktion der Brennkraftmaschine 1 in der Ist-Leistung P_{g} liegt) in die Zukunft t+D prädizierter Form P^{d}_{g}(t+D), P_{g}(t+D), pᵢₘ(t+D) als Output wieder ausgegeben. Dieser Output dient als Input für einen Regler 12, welcher in Abhängigkeit des Inputs einen Sollwert für den Lambda-Wert λ_{d} ausgibt. Die Prädiktion erfolgt in an sich bekannter Weise modellbasiert durch Integration jener Differentialgleichungen, welche das dynamische Verhalten dieser Größen beschreiben. Diese Differentialgleichungen sind dem Fachmann wohl bekannt.

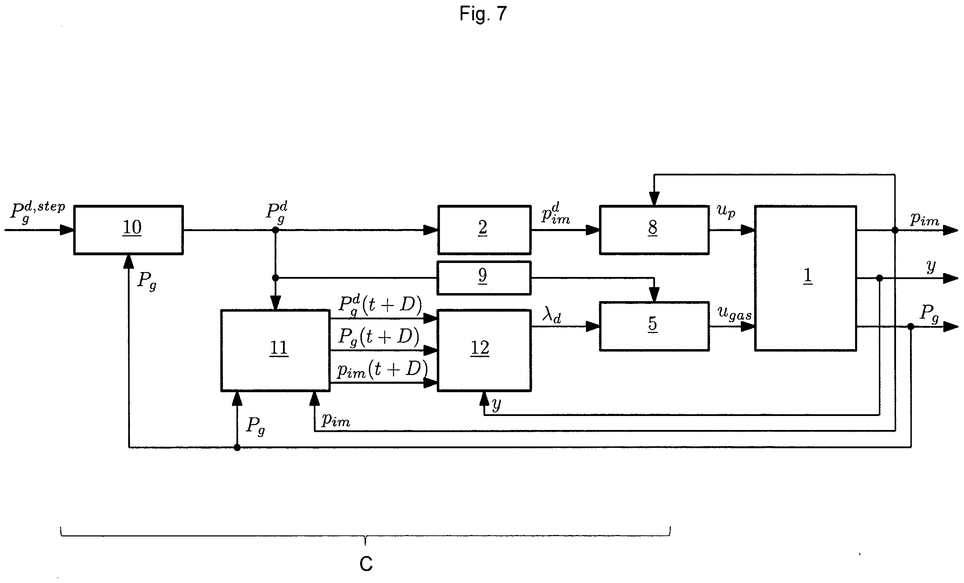

Die Figur 7 zeigt ein Ausführungsbeispiel der Erfindung, bei welchem alle Maßnahmen der vorbesprochenen Ausführungsbeispiele gemeinsam vorgesehen sind. Natürlich könnten hier auch einzelne Maßnahmen weggelassen werden. In der Regeleinrichtung C werden für alle Ausführungsbeispiele die zur Steuerung / Regelung erforderlichen Baugruppen und logischen Zusammenhänge zusammengefasst. Unter "Regler" ist im Zusammenhang der vorliegenden Anmeldung nicht zwingend ein physisches Bauteil gemeint, sondern eine bestimmte Funktion, die etwa durch einen Schaltkreis, Speicher etc. abgebildet sein kann.

### Liste der verwendeten Bezugszeichen:

- 1: Brennkraftmaschine
- 2: Funktionaler Zusammenhang
- 3: Erster Komparator
- 4: Erster PID-Regler
- 5: Erster Regler
- 6: Zweiter PID-Regler
- 7: Zweiter Komparator
- 8: Ladedruckregler
- 9: Skip-Fire-Regelmodul
- 10: Trajektoriengenerator
- 11: Totzeitkompensationseinrichtung
- 12: Weiterer Regler
- λ_{d}: Soll-Lambda-Wert (Sollwert für Verbrennungsluftverhältnis)
- λ: Lambda-Wert (Verbrennungsluftverhältnis)
- P^{d}_{g}: Soll-Leistung
- P_{g}: Ist-Leistung
- P^{d,step}_{g}: sprungförmige Vorgabe der Soll-Leistung
- pᵢₘ: Istladedruck
- p^{d}ᵢₘ: Ladedrucksollwert
- t: Zeit
- C: Regeleinrichtung
- D: Totzeit
- U_{gas}: Brenngasmassenstrom
- uₚ: den Istladedruck pᵢₘ beeinflussende Steuersignale
- y: Istgrößen der Brennkraftmaschine 1 und / oder nachgeschalteter Einheiten

## Patentansprüche

1. Brennkraftmaschine (1) mit einer Regeleinrichtung (C), wobei in der Brennkraftmaschine (1) ein Luft-Brennstoff-Gemisch mit einem durch die Regeleinrichtung einstellbaren Verbrennungsluftverhältnis (λ) verbrannt wird, wobei die Regeleinrichtung (C) aufweist:
- einen Leistungsregelkreis, der dazu ausgebildet ist, eine Ist-Leistung (P_{g}) der Brennkraftmaschine (1) an eine Soll-Leistung (P^{d}_{g}) der Brennkraftmaschine (1) über eine Einstellung des Lambda-Werts (λ) anzugleichen,
- einen NOx-Emissionsregelkreis, der dazu ausgebildet ist, über einen funktionalen Zusammenhang (2) den Ladedruck als Ersatzgröße für die NOx-Emission durch den Ladedruck beeinflussende Aktuatoren so anzusteuern, dass für jede Soll-Leistung (P^{d}_{g}) der Brennkraftmaschine ein Ladedrucksollwert (p^{d}ᵢₘ) einstellbar ist.

2. Brennkraftmaschine (1) nach Anspruch 1, wobei der NOx-Emissionsregelkreis einen Ladedruckregler (8) aufweist, durch welchen ein Istladedruck (pᵢₘ) an einen Ladedrucksollwert (p^{d}ᵢₘ) angleichbar ist, wobei der Ladedruckregler (8) entweder in Form eines Komparators und eines PID-Reglers oder als modellbasierter Regler ausgeführt ist.

3. Brennkraftmaschine (1) nach Anspruch 1 oder 2, wobei der Leistungsregelkreis einen Regler (5) aufweist, durch welchen Aktuatoren, welche den Brenngasmassenstrom (u_{gas}) beeinflussen, ansteuerbar sind, wobei der Regler (5) entweder einen Komparator (7) und einen PID-Regler (6) aufweist oder als modellbasierter Regler ausgebildet ist.

4. Brennkraftmaschine nach Anspruch 3, wobei die Aktuatoren Port-Injection-Ventile oder eine Gasdosiereinrichtung eines Gasmischers sind.

5. Brennkraftmaschine (1) nach wenigstens einem der Ansprüche 1 bis 4, wobei im Leistungsregelkreis zusätzlich ein Skip-Fire-Regelmodul (9) vorgesehen ist, welchem als Input die Soll-Leistung (P^{d}_{g}) zuführbar ist und welches dazu ausgebildet ist, den Regler (5) für den Brenngasmassenstrom (u_{gas}) so anzusteuern, dass in ausgewählten Zylindern der Brennkraftmaschine (1) mangels Brenngas keine Verbrennung erfolgt.

6. Brennkraftmaschine (1) nach wenigstens einem der Ansprüche 1 bis 5, wobei der PID-Regler (6) innerhalb des Leistungsregelkreises derart ausgebildet ist, dass dem PID-Regler (6) weitere Ist-Größen (y) als Input des PID-Reglers (6) zuführbar sind, wobei der PID-Regler (6) unter Berücksichtigung der weiteren Ist-Größen (y) die Stellgröße Soll-Lambda-Wert (λ_{d})dahingehend limitiert, dass bei Erreichen von Grenzwerten der Ist-Größen keine weitere Änderung des Soll-Lambda-Werts (λ_{d}) in eine die Ist-Größen (y) weiter abträglich beeinflussende Richtung erfolgt.

7. Brennkraftmaschine (1) nach wenigstens einem der Ansprüche 1 bis 6, wobei dem Leistungsregelkreis und dem NOx-Emissionsregelkreis ein Trajektoriengenerator (10) vorgelagert ist, welcher dazu ausgebildet ist, eine nicht-stetige, sprungförmige Vorgabe der Soll-Leistung (P^{d,step}_{g}) durch einen Benutzer in eine stetige Trajektorie für die Soll-Leistung (P^{d}_{g}) umzuwandeln.

8. Brennkraftmaschine (1) nach Anspruch 7, wobei der Trajektoriengenerator (10) dazu ausgebildet ist, als Input zusätzlich die Ist-Leistung (P_{g}) zu erhalten und eine Abweichung zwischen dem momentanen Wert der Soll-Leistung (P^{d}_{g}) gemäß der stetigen Funktion und der Ist-Leistung (P_{g}) dahingehend zu überwachen, dass bei zu großer Abweichung die stetige Trajektorie der Soll-Leistung (P^{d}_{g}) auf einen bestimmten Wert über der Ist-Leistung (P_{g}) limitiert wird.

9. Brennkraftmaschine (1) nach wenigstens einem der Ansprüche 1 bis 7, wobei eine Totzeitkompensationseinrichtung (11) vorgesehen ist, welcher eine vorgebbare Totzeit (D) zuführbar ist und welche dazu ausgebildet ist, die Soll-Leistung (P^{d}_{g}(t)), die Ist-Leistung (P_{g}(t)) und den Istladedruck ( pᵢₘ(t)) zu einer Zeit (t) zu erhalten und in in die Zukunft t+D prädizierter Form P^{d}_{g}(t+D), P_{g}(t+D), pᵢₘ(t+D) als Output wieder auszugeben.

10. Brennkraftmaschine (1) nach Anspruch 9, wobei ein weiterer Regler (12) vorgesehen ist, welcher dazu ausgebildet ist, den Output der Totzeitkompensationseinrichtung (11) als Input zu erhalten und in Abhängigkeit des Inputs einen Soll-Lambda-Wert (λ_{d}) auszugeben.

## Claims

1. An internal combustion engine (1) having a regulating device (C) wherein an air-fuel mixture with a combustion air ratio (λ) which is adjustable by the regulating device is burnt in the internal combustion engine, wherein the regulating device (C) has:
- an power output regulating circuit adapted to adapt an actual output (P_{g}) of the internal combustion engine (1) to a reference power output (P^{d}_{g}) of the internal combustion engine (1) by way of an adjustment of the lambda value (λ), and
- an NOx emission regulating circuit adapted by way of a functional relationship (2) to actuate actuators influencing the charge pressure as an alternative parameter for the NOx emission by the charge pressure in such a way that a charge pressure reference value (p^{d}ᵢₘ) can be set for each reference power output (P^{d}_{g}) of the internal combustion engine.

2. An internal combustion engine (1) as set forth in claim 1 wherein the NOx emission regulating circuit has a charge pressure regulator (8) by which an actual charge pressure (pᵢₘ) can be adapted to a charge pressure reference value (p^{d}ᵢₘ), wherein the charge pressure regulator (8) is either in the form of a comparator and a PID regulator or in the form of a model-based regulator.

3. An internal combustion engine (1) as set forth in claim 1 or claim 2 wherein the power output regulating circuit has a regulator (5) by which actuators, which influence the combustion gas mass flow (u_{gas}) are actuable, wherein the regulator (5) has either a comparator (7) and a PID regulator (6) or is in the form of a model-based regulator.

4. An internal combustion engine as set forth in claim 3, wherein the actuators are port injection valves or a gas metering device of a gas mixer.

5. An internal combustion engine (1) as set forth in at least one of claims 1 through 4 wherein provided in the power output regulating circuit there is additionally a skip fire regulating module (9) to which the reference power output (P^{d}_{g}) can be fed as an input and which is adapted to actuate the regulator (5) for the combustion gas mass flow (u_{gas}) in such a way that no combustion occurs in selected cylinders of the internal combustion engine in the absence of combustion gas.

6. An internal combustion engine (1) as set forth in at least one of claims 1 through 5 wherein the PID regulator (6) within the power output regulating circuit is so adapted that further actual parameters (y) can be fed to the PID regulator (6) as the input thereof, wherein the PID regulator (6) limits the control parameter reference lambda value (λ_{d}) having regard to the further actual parameters (y) in such a way that when limit values of the actual parameters are reached no further change in the reference lambda value (λ_{d}) occurs in a direction which further adversely influences the actual parameters (y).

7. An internal combustion engine (1) as set forth in at least one of claims 1 through 6 wherein disposed upstream of the power output regulating circuit and the NOx emission regulating circuit is a trajectory generator (10) adapted to convert a non-steady abrupt presetting of the reference power output (P^{d,step}_{g}) by a user into a steady trajectory for the reference power output (P^{d}_{g}).

8. An internal combustion engine (1) as set forth in claim 7 wherein the trajectory generator (10) is adapted to additionally receive the actual power output (P_{g}) as an input and to monitor a deviation between the instantaneous value of the reference power output (P^{d}_{g}) in accordance with the steady function and the actual power output (P_{g}) such that in the event of an excessively large deviation the steady trajectory of the reference power output (P^{d}_{g}) is limited to a given value above the actual power output (P_{g}).

9. An internal combustion engine (1) as set forth in at least one of claims 1 through 7 wherein there is provided a dead time compensation device (11) to which a predeterminable dead time (D) can be fed and which is adapted to acquire the reference power output (P^{d}_{g}(t)), the actual power output (P_{g}(t)) and the actual charge pressure (pᵢₘ(t)) at a time (t) and output same as an output in a form P^{d}_{g}(t+D), P_{g}(t+D), pᵢₘ(t+D) predicted into the future t+D.

10. An internal combustion engine (1) as set forth in claim 9 wherein there is provided a further regulator (12) which is adapted to acquire the output of the dead time compensation device (11) as input and to output a reference lambda value (λ_{d}) in dependence on the input.

## Revendications

1. Moteur à combustion interne (1), avec un dispositif de régulation (C), un mélange air-carburant étant brûlé dans le moteur à combustion interne (1) avec un rapport d'air de combustion (λ) pouvant être réglé par le dispositif de régulation, le dispositif de régulation (C) comportant :
- un circuit de régulation de puissance qui est constitué pour ajuster une puissance effective (P_{g}) du moteur à combustion interne (1) à une puissance de consigne (P^{d}_{g}) du moteur à combustion interne (1) par le biais d'un réglage de la valeur lambda (A),
- un circuit de régulation des émissions de NOx, qui est constitué pour, par le biais d'une relation fonctionnelle (2), piloter la pression de charge en tant que grandeur de remplacement pour les émissions de NOx par des actionneurs influençant la pression de charge de telle sorte qu'une valeur de consigne de pression de charge (p^{d}ᵢₘ) peut être réglée pour chaque puissance de consigne (P^{d}_{g}) du moteur à combustion interne.

2. Moteur à combustion interne (1) selon la revendication 1, le circuit de régulation des émissions de NOx comportant un régulateur de pression de charge (8) par lequel une pression de charge effective (pᵢₘ) peut être ajustée à une valeur de consigne de pression de charge (p^{d}ᵢₘ), le régulateur de pression de charge (8) étant réalisé soit sous la forme d'un comparateur et d'un régulateur PID, soit en tant que régulateur basé sur un modèle.

3. Moteur à combustion interne (1) selon la revendication 1 ou 2, le circuit de régulation de puissance comportant un régulateur (5) par lequel des actionneurs qui influencent le flux massique de gaz de combustion (u_{gas}) peuvent être pilotés, le régulateur (5) soit comportant un comparateur (7) et un régulateur PID (6), soit étant réalisé en tant que régulateur basé sur un modèle.

4. Moteur à combustion interne selon la revendication 3, les actionneurs étant des vannes port-injection ou un système de dosage de gaz d'un mélangeur de gaz.

5. Moteur à combustion interne (1) selon au moins l'une des revendications 1 à 4, un module de régulation Skip-Fire (9) étant prévu en plus dans le circuit de régulation de puissance, module auquel la puissance de consigne (P^{d}_{g}) peut être conduite en tant qu'entrée et qui est constitué pour piloter le régulateur (5) du flux massique de gaz de combustion (u_{gas}) de telle sorte qu'aucune combustion n'est réalisée dans des cylindres sélectionnés du moteur à combustion interne (1) par manque de gaz combustible.

6. Moteur à combustion interne (1) selon au moins l'une des revendications 1 à 5, le régulateur PID (6) étant constitué à l'intérieur du circuit de régulation de puissance de telle sorte que d'autres grandeurs effectives (y) peuvent être acheminées au régulateur PID (6) en tant qu'entrée du régulateur PID (6), le régulateur PID (6) limitant, en prenant en compte les autres grandeurs effectives (y), la grandeur de réglage valeur lambda de consigne (λ_{d}) en ce sens que, lorsque des valeurs limites des grandeurs effectives sont atteintes, il n'intervient aucune autre modification de la valeur lambda de consigne (λ_{d}) dans une direction influençant défavorablement davantage les grandeurs effectives (y).

7. Moteur à combustion interne (1) selon au moins l'une des revendications 1 à 6, un générateur de trajectoire (10) étant installé en amont du circuit de régulation de puissance et du circuit de régulation des émissions de NOx, lequel générateur est constitué pour convertir une spécification préalable non constante et variant brusquement de la puissance de consigne (P^{d,step}_{g}) par un utilisateur en une trajectoire constante pour la puissance de consigne (P^{d}_{g}).

8. Moteur à combustion interne (1) selon la revendication 7, le générateur de trajectoire (10) étant constitué pour obtenir en tant qu'entrée en plus la puissance effective (P_{g}) et pour surveiller une divergence entre la valeur momentanée de la puissance de consigne (P^{d}_{g}) selon la fonction constante et la puissance effective (P_{g}) en ce sens que, en présence d'une divergence trop importante, la trajectoire constante de la puissance de consigne (P^{d}_{g}) est limitée à une valeur définie au-dessus de la puissance effective (P_{g}).

9. Moteur à combustion interne (1) selon au moins l'une des revendications 1 à 7, un système de compensation de temps mort (11) étant prévu auquel un temps mort (D) spécifiable au préalable peut être acheminé et qui est constitué pour obtenir la puissance de consigne (P^{d}_{g}(t)), la puissance effective (P_{g}(t)) et la pression de charge effective (pᵢₘ(t)) à un instant (t) et pour les délivrer de nouveau en tant que sortie sous la forme prédite P^{d}_{g}(t+D), P_{g}(t+D), pᵢₘ(t+D) pour le futur t+D.

10. Moteur à combustion interne (1) selon la revendication 9, un autre régulateur (12) étant prévu, qui est constitué pour obtenir la sortie du système de compensation de temps mort (11) en tant qu'entrée et pour délivrer une valeur lambda de consigne(λ_{d}) en fonction de l'entrée.
